# EUROPEAN PATENT SPECIFICATION

(11) **EP 1 558 481 B1**
(45) Date of publication and mention of the grant of the patent: **13.02.2008**
(21) Application number: 03781619.6
(22) Date of filing: 31.10.2003
(51) Int. Cl.: B62D 25/06

(54) **STRUCTURAL ROOF PANEL SYSTEMS**
TRAGENDES FAHRZEUGDACHSYSTEM
SYSTEMES DE PANNEAU DE TOIT STRUCTURELS

(30) Priority: 07.11.2002 US 424566 P
(43) Date of publication of application: 03.08.2005
(73) Proprietor: Johnson Controls Technology Company, Holland, MI 49423 (US)
(72) Inventor: STREBE, Kevin, M. Johnsson Controls Technology Company, Holland, MI 49423 (US); FISCHER, Douglas, A., Jenison, MI 49428 (US); NORLAND, Leif, Andrew, Holland, MI 49424 (US)
(74) Representative: Marshall, Caroline
(86) International application number: PCT/US2003/034700
(87) International publication number: WO 2004/043770

(56) References cited:
- EP-A- 1 138 536
- DE-A- 3 420 781
- DE-A- 3 820 845
- DE-A- 3 835 560
- US-A- 3 427 068

## Description

### BACKGROUND OF THE INVENTION

Field of the Invention - The present invention relates generally to roof systems for vehicles and more particularly to roof systems which include a structural element which include or support the exterior roof panel, and which support the headliner and a wide variety of systems commonly used in the overhead portion of vehicles, such as automobiles, vans, SUVs, trucks, and the like. In its preferred embodiments, the present invention relates more specifically to an all-in-one structural system in which the roof panel and the structural support are molded as a unitary body, a second embodiment in which a skeletal super-structure is designed to receive any of a wide variety of overhead components and the roof panel, and a third embodiment in which structural elements to which overhead system components are attached and are moved to the side or front as pods, which again eliminating the need for structural strength for either the roof panel or the headliner.

Description of the Prior Art - It is common practice in today's vehicle manufacturing field for an vehicle body to be formed, using either a plurality of parts, a unibody construction system, or the like. Typically, the vehicle roof panel is attached to various pillar supports, and overhead system components are added to the vehicle by passing a structural headliner through the windshield, or other windows of the vehicle, and connecting the overhead systems to the roof panel along the side rails and/or to other structural components, such as roof bows. The assembly of the headliner and overhead system components within the confines of the vehicle interior is a time consuming and expensive part of vehicle assembly. For example, many components must be attached upwardly in the Z axis direction, and manipulation in that area is difficult using robotics or hand labor to complete mechanical attachments, as well as various electrical connections, and the like.
DE 38 35 560 discloses a lattice structure for a full plastic roof formed from polygonal or round cells which are distributed uniformly over the roof surface and are designed to hold solar cells. The cells provide reinforcement and, at the same time, provide a receptacle for the solar cells and hence an energy roof. The roof outer shell is formed in the region of the solar cells from transparent material and is adhesively bonded onto the supporting framework. The cells are provided with reinforcing surfaces which run at a distance from the upper boundary of the cells and have openings.

A large variety of overhead system components are currently used in vehicles, including, but not limited to, sunroofs, dome lights, assist handles, HVAC controls, vents and ducting, sun protection systems, infotainment components, acoustical features, antennas, aesthetic treatments, instrumentation and navigation systems, storage areas, speaker systems, emergency vehicle warning systems, rear view devices such as cameras positioned to assist in reverse travel of the vehicle or parking, airbags, other impact countermeasure devices or sensors, various types of lighting, center high mount stop lamps (CHMSL), power and signal distribution (P&SD) systems, D-rings, side view systems, close off trim, rail systems, seals, and the like.

Frequently, some of the above-noted components and others which are in use in the field or which will be developed for use in overhead systems are options and, accordingly, a particular vehicle may include all of them, or some smaller subcombination of a variety of the features. As a simple example, a particular vehicle may be available with or without a sun/moon roof. Another example would be vehicles which are optionally equipped with rear seat DVD or VHS monitors. Numerous additional examples will be readily apparent to those skilled in the art.

In addition to the problem of variability from vehicle to vehicle, present systems require that the headliner be structural in nature, i.e., be able to support itself, and to act as a support or trim cover for overhead system components which are attached to the headliner or to other structural components of the vehicle, such as roof bows, side rails, and the like. As a result, overhead system combinations with the headliners tend to be heavy, adding yet another burden to the manufacturing issues discussed above. Furthermore, providing structural plastics or other support for headliners requires additional raw materials, and the associated cost and weight related thereto.

Several U.S. patents describe roof systems, some of which are deemed by their inventors to be modular, although they differ from the structural roof systems of the present invention. For example, in United States Patent No. 5,018,781, issued May 28, 1991, to Kumasaka et al. for "Roof Structure for Modular Vehicle Body and Method of Building the Same," the modular component includes a plurality of sections, i.e., roof rails on the side, rear and front, and a roof. Mechanical fasteners are used to attach the roof to the rails. The rails and roof are assembled to the vehicle as a single component.

United States Patent No. 6,299,244, issued October 9, 2001, to Tarahomi for "Lightweight Vehicle Body Panels and Method of Blow Molding Vehicle Body Panels". The panel for the roof is blow molded and attachments such as seals or seal retainers may be secured to peripheral portions thereof. The method of assembling such component to a vehicle comprises blow molding all or a substantial part of the vehicle body panel (a roof is illustrated), and then securing attachments to openings formed on the blow molded body or to peripheral portions thereof.

A "Roof Module for Automobile" is illustrated and described in U.S. Patent No. 5,887,939, issued March 30, 1999, to Yamaguchi et al. In particular, a roof module includes an attachment area for a function-intensive unit to be mounted thereon including electrical modules and control circuits. The module is attached to the inner surface of the ceiling of a vehicle, and the unit is preferably a case including a plurality of functional parts. A control circuit board includes attachments for roof wire harnesses. These are locked to the module through a preliminary locking member, the wire harness including a connector and a fixing member for fixing the form and the reception connector in the sealing portion. The vast majority of the illustrations refer to the wire harness and the connectors useful in the invention.

U.S. Patent No. 6,279,889, issued August 28, 2001, issued to Marchart et al., for "Roof Construction for a Vehicle" describes a roof which has a large surface roof opening surrounded by vehicle side members which can be closed by at least one movable roof section and a tailgate. The forward section is displaced toward the rear of the vehicle and under the tailgate using vehicle rails extending in a longitudinal direction and a carrying frame which together form a prefabricated module.

"Work Vehicle Roof Structure" is described in Schreyer et al., U.S. Patent No. 6,279,978, issued August 28, 2001. This device, primarily used for an operator's cab of a work vehicle, has a sound insulating foam layer between a top surface structure and a bottom surface structure facing the interior of the operator compartment. Adhesives are used to bond the structures together and ventilating channels are included in the device to assist in the air conditioning of the vehicle. The headliner located below the foam liner includes a top surface facing the bottom surface of the foam liner and a bottom surface facing the interior of the compartment. The top surface of the headliner encloses the ventilating channels to form ducts, whereas the top surface of the headliner forms the bottom wall of the ducts. The foam liner forms two side walls and the top wall of the ventilating ducts.

A number of further patents illustrate various other attempts to provide modular structures for vehicle components. For example, a vehicle body construction having upper and lower sections is disclosed in Barenyi, U.S. Patent No. 2,880,032, issued March 31, 1959, for "Vehicle Body Composed of an Upper and a Lower Section." Another construction comprising two main modular body units is described in Tjaarda, U.S. Patent No. 3,022,105, issued February 20, 1962, for "Composite Automobile Design."

A technique for joining a roof to the remainder of a vehicle body which comprises inserting pillars into mounting receptacles is shown in Klaasen, U.S. Patent No. 3,127,213, issued March 31, 1964, for "Automobile Roof Mounting." A still further structure for vehicle roof mounting is that shown in Keahn et al., U.S. Patent No. 3,427,068, issued February 11, 1969, for "Vehicle Roof Structure." In this patent, a unitary outer roof panel is joined with a unitary inner roof panel, both being provided with apertures for receiving windshields and rear windows.

A "Body for a Motor Vehicle, Particularly a Passenger Car" is described in U.S. Patent No. 5,092,649, issued March 3, 1992, to Wurl. In this patent, a top and bottom of a vehicle body are connected at the belt-line so that an existing bottom can be used with different styles of tops.

Freeman et al., in U.S. Patent No. 5,660,427, issued August 26, 1997, for "Hybrid Vehicle," describes a cab shell having a plurality of panels, at least some of which are made from sheet-molded compound.

In U.S. Patent No. 5,915,781 issued on June 29, 1999, to DeRees for "Vehicle Body Assembly," a top portion of a vehicle is sealed to a bottom portion using adhesive injected into pre-designated channel cavities formed at the joint interface of the body members.

Certain foreign patents have also issued having relevance to the subject matter of this invention. In most cases, the comments concerning such foreign patents are based solely on the abstracts thereof, or the drawings, to the extent an abstract was not available.

Porsche F. AG obtained German patent DE 3204.526.A for "Reinforced Plastics Roof for Car". The frame disclosed herein has hollow section alloys with lower mounting points flattened into tags, the roof being molded in a single piece over a frame. The roof structure is described as self supporting, lightweight, and strong. Metal extrusions are formed at the time of preparation of the roof, and are shaped so that other fittings can be clipped over the edges, such as sealing strips for doors and windows.

Italian patent 561476 issued to Francis Lombardi & C. S.r.l. a. Vercelli, shows a modular vehicle body construction, including separate doors, side frames which include portions of the fenders, and other body components.

A "Car Body Structure for Automobile" is disclosed in Mazda Japanese Published Patent Application 1-182175. Upper and lower body parts are joined together by a flange. The upper body part is made of a plurality of steel parts welded together, while the lower body part is made from synthetic resin.

Nissan, in Japanese Published Application 63-46976 discloses a "Car Body Structure for Automobile" which can be automatically assembled by a robot. The patent discusses dividing the car body into three "blocks": an engine compartment, an upper body, and a lower body. Additional parts including hoods, trunks, fenders, side shields, and the like are added to their respective components in separate lines, and after numerous components are installed, they are matched and combined to the car body.

Another Japanese Published Application 4,129,886 issued on April 30, 1992, to Toyota for "Module Assembling Structure for Car Body." This document seems to relate primarily to the alignment of a car body part with a lower car body part and flanges which have predefined offsets. The flanges do not interfere with one another at the time of assembly. The flanges are subsequently covered by trim.

U.K. Patent 746,139 dated March, 1956, issued to Fiat for a "Motor Vehicle Body." In this construction, a plurality of modules, including an upper body having apertures for front and rear windows and a side panel including door openings and fenders are described. The claims to the patent focus on the front end construction for such a vehicle.

Porsche German Patent 4018592 A1 issued in 1991 will not be described here as it is the priority document for U.S. Patent 5,092,649 discussed above.

In Dutch patent 8006431, the English abstract indicates that a prefabricated mounting frame for a sliding roof is finished such that the underside forms the inner roof lining of the car. Further, the perimeter preferably corresponds with that of the inside of the car roof, and the mounting frame may include downwardly extending outer corners, connectable to window posts. The preferred finish consists of a layer of hard plastic foam with an inner vinyl or cloth lining which projects outside the perimeter of the frame and has corner flaps. The frame may be partially plastic and include metal fixing flanges embedded in the plastic.

A structural roof panel system which does not need the headliner or the roof panel to be structural in nature and which maintains flexibility for adding overhead system components to a vehicle would represent a significant advance in this art.

### FEATURES SUMMARY OF THE INVENTION

A primary feature of the present invention is to provide structural roof panels for vehicles which are engineered to receive overhead components.

Another feature of the present invention is to provide an all-in-one roof system in which the roof panel and the structural support therefor are integral and engineered to receive overhead components, subsystems, etc.

Another feature of the present invention is to provide a structural roof panel system for a vehicle in which a skeletal super structure is designed to receive any combination of a variety of overhead systems, and in which the external panel and the headliner need not be structural.

Another feature of the present invention is to provide a structural support for overhead vehicle components located as pods which extend along the side and/or the front and rear of the vehicle, again eliminating the requirement that the roof panel or the headliner be structural in nature.

A yet further feature of the present invention is to provide structural roof panel systems for vehicles which reduce assembly cost and time.

Another feature of the present invention is to provide structural roof panel systems for vehicles which can be created by any of a number of forming or molding techniques, such as injection or sheet molding, pressed fibrit, stamping, forming, casting, and the like.

A different feature of the present invention is to provide structural roof panel systems for vehicles in which the external panel can be prepared by molding, or can be painted, wrapped, coated, covered with a film, hand molded in color, etc.

Another feature of the present invention is to provide structural roof panel systems for vehicles in which a single part can replace a large number of components in the assembly process and can be shipped to an OEM final assembly plant as a single part for a customer's vehicle.

A different feature of the present invention is to provide structural roof panel systems for vehicles which can be readily attached to other vehicle body components using adhesives, joints, fasteners, welding, MIG, or the like, and in which, in the most preferred embodiments, are self locating about the perimeter of the vehicle body.

Another feature of the present invention is to provide modules for vehicle assembly which permits Z-axis attachment of interior components (such as seats) and wherein the module itself may include self-aligning locating systems to minimize the requirement for mechanical fasteners.

Another feature of the present invention is to provide parts to an OEM assembly plant which may be bar coded, embedded with a smart chip, or the like for selection by robotic or manual labor for subsequent assembly to a vehicle.

Yet a further feature of the present invention is to provide a belt-line-up structural module for vehicle assembly which includes a variety of content including overhead systems, package trays and associated systems, front and rear wiper assemblies, seals, wiring, HVAC components, occupant protection systems, etc.

A still further feature of the present invention is to allow for use of simple, non-structural, die-cut, stretched, or otherwise prepared materials for the headliners that are attached to the structural roof panel systems of the present invention.

A still further feature of the present invention is to provide structural roof panel systems for vehicles in which acoustical material may be added between a headliner and the structural components of the panel system, using inexpensive materials, rather than expensive materials made as part of the headliner system itself.

How the above and other features of the present invention are accomplished will be described in connection with the following detailed description of the preferred embodiments, taken in conjunction with the FIGURES. Such features can be realized in the aggregate, individually, or in various subcombinations as will become apparent as the description continues. In one embodiment, a structural roof panel system includes a single molded or formed roof panel in which a variety of knock-out or predetermined holes and accessing locations are provided behind the Class A interior and exterior surfaces. In this embodiment, for example, optional components can be added or not depending on customer or dealer preference, including such items as sunroofs, infotainment systems, and the other enumerated overhead components identified above. The Class A exterior surface can be supplied by any suitable technique such as painting, e-coating, in mold painting, the use of films, molded in color, etc., to match other body parts prepared at different locations. The headliner becomes merely a cover and need not be structural since the heavy components are attached to the molded, stamped, or formed roof panel.

In a second embodiment, the features are accomplished by providing a super-structure in the form of a skeleton located between a nonstructural headliner and an external, non-structural body roof panel. As with the all-in-one embodiment, the structural overhead components identified above are attached to the super-structure which supports the weight thereof. Accordingly, neither the roof panel nor the headliner needs to be structural, and assembly of the three components results in a structural roof panel system which may be installed as a single unit.

In a third embodiment of the invention, structural support for the roof panel and for the headliner, as well as for overhead system components, is provided by pods which, for example, may extend along the side rails of the vehicle or the front or rear headers.

In a fourth embodiment of the invention, a belt-line-up structure is preferably preassembled by a Tier 1 manufacturer and shuttled as a completed unit to an OEM assembly plant for attachment to the rest of the vehicle in a single step. The belt-line-up structure can include the exterior class-a surface to match the remainder of the vehicle and may include structural roof components which are molded as a single unit, or which include structural roof panel systems using pods or super structures. The belt-line-up structure reduces OEM capital costs, manufacturing space and labor requirements, and also reduces overall costs for the Tier 1 supplier by enhancing manufacturing efficiencies and simplifying component attachment, resulting in net cost savings for both. The belt-line-up structure can be formed in any of a variety of techniques which will be described below and may be attached to the remaining components of the vehicle using any of a variety of attachment techniques, including self-locating devices and adhesives. In the belt-line-up structure of the most preferred form of this embodiment, pillar structures are included and are also given class-a surface treatments, while non-visible areas of the pillars can remain raw, body colored, or covered with a base coat such as matte black. Other belt-line-up components (such as package shelf, windshield and upper components) may also be provided in the modular unit.

In any of these embodiments, other ways in which the features are accomplished will become apparent to those skilled in the art after they have read this specification, such other ways being deemed to fall within the scope of the present invention if they fall within the scope of the claims which follow.

### BRIEF DESCRIPTION OF THE DRAWINGS

FIGURE 1 is an exploded view of an all-in-one roof system showing an engineered structural roof panel system and several overhead system components that can be added thereto;

FIGURE 2 is an exploded view of a structural roof panel system including a super-structure to which various overhead system components may be affixed;

FIGURE 3 is an exploded view of a structural roof panel system in which side pods are used to carry overhead system components, again shown in exploded form; and

FIGURE 4 is a perspective, exploded view of a further embodiment of the invention.

In the various FIGURES, like reference numerals are used to indicate like components.

### DETAILED DESCRIPTION OF THE PREFERRED EMBODIMENTS

Before proceeding with the detailed description of the preferred embodiments of the structural roof panel systems of the present invention, several general comments can be made about the applicability and the scope thereof.

First, a variety of overhead system components are illustrated in the various FIGURES, including airbags, mirrors, antenna grids, sunroofs, overhead consoles, dome lights, visors, and wire harnesses. The illustrated components should not in any way be considered limiting with regard to the overhead system components which can be included with the structural roof systems. A more complete, but still not limiting, list of possible components includes sunroof/moon roof systems, folding canvas, T-tops, glass roof panels, HVAC controls, HVAC vents, HVAC ducting, headrests, sun protection systems, infotainment components and systems, multiple antennas, single antennas, acoustic treatments, headliners, instrumentation and navigation systems, storage components, speakers, emergency warning systems, rearview/outside viewing cameras or displays, airbags, other head impact countermeasures, occupant sensing systems, lights, CHMSL, P & SD systems, D-rings, side view systems, close out trim, rail systems, or the like.

The illustrated embodiments do not in all cases show the way in which overhead equipment is attached to the structural component of the structural roof panel systems, and it should be clearly understood that the attachment systems, in and of themselves, are not part of the present invention. The various overhead components mentioned above, and others which may now be in use or which may subsequently be developed for use in vehicles, may be attached by any type of suitable connectors, or attachment systems, including adhesives, snap-in arrangements, Velcro7, straps, threaded fasteners, rivets, bolt and nut arrangements, interference fit, ties, clips, and the like. The invention in no way should be deemed limited by the technique used to attach any particular component to the structural element of the structural roof panel systems of the present invention.

Roof panels can be individually created or combined with the structural system (in one embodiment) and may be made by any number of molding or forming techniques such as injection molding, casting, reinforced injection molding, sheet molding, stamping, casting, hydro-forming pressed fibrit, lay-up or other techniques currently utilized to prepare panels for vehicles. Moreover, the roof panels may receive their class "A" exterior surface through any of a variety of known techniques such as painting, e-coating, in-mold painting, the applications of films, mold in color, etc. Still further, the particular materials from which the roof panels can be made include metals, metal alloys, resins, reinforced resins, and the like.

The technique by which the various components of the roof systems of the present invention are assembled can also be widely varied. While in most cases, the complete roof system will be installed at a vehicle assembly plant by lowering it on the Z-axis, the build up of the roof system itself, since it is done at a different facility, can be done in an inverted state, so that the weight thereof does not need to be supported from above, and workers or robotic equipment may more easily work on the system. While a preferred technique will be described for the combination of the structural roof panel systems of the present invention with the vehicle, it is also possible that they can be installed from the inside vehicle bottom up. In either case, it is also preferred to have locator systems on the structural roof panel systems, to be aligned with locator elements on the vehicle perimeter. This technique will avoid fixturing and tooling costs at the OEM assembly plant. The inclusion of particular self-locating elements, the number thereof, or their use at all is optional and not to be deemed limiting with regard to the scope of the invention.

Another aspect of the invention described in this application is the separate assembly of the structural roof system by a Tier 1 supplier and the delivery thereof to the OEM for attachment to other vehicle components. One technique for specifying a particular structural roof system for use with a particular vehicle body proceeding down an assembly line is to use bar codes, but any other type of identifying technique may be used, e.g. smart chips. The OEM will pick an appropriate roof panel system from the shipping system (for example racks with flexible supports) and by the use of robotics or manual labor, attach the structural roof panel system to the roof perimeter with any of the variety of attachment systems and locators described above. The particular techniques employed to seal the structural roof systems to the remainder of the vehicle is not shown in the drawings, but it should be apparent to those skilled in the art that seals are needed to protect the vehicle interior against water, dust, wind, noise and the like.

The particular type of headliner to be used with the structural roof panel systems of the present invention can be varied widely and may be selected from any of those currently used or known to the art. The headliner need not be structural, as indicated above, but various attributes such as acoustic control, aesthetics, head impact countermeasure features, and the like, which are features of existing systems, can readily be used in the present invention. Furthermore, while the disclosed structural roof panel systems of the present invention do not require that either the roof panel (as a separate element) or the headliner be structural in nature, the degree of structural effect on the overall system can range from zero to a substantial amount without departing from the scope of the present invention. For example, the headliner may be thermoformed and have sufficient structure to withstand damage during shipment from its place of manufacture to the structural roof panel system assembly location, and the roof panel may have sufficient structure to avoid damage during its shipment, finishing, or the like. The overall strength of the structural roof system will be influenced by the structural roof component shown in the three embodiments, with potential additive input from the headliner, the roof panel, or in some cases, the overhead system components themselves.

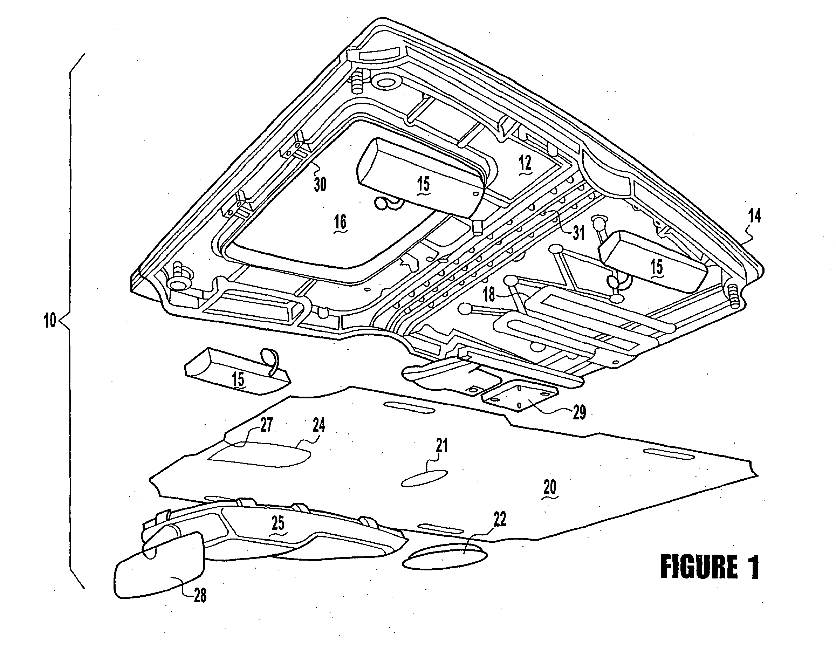

Proceeding now to the description of four embodiments of the invention, FIGURE 1 shows an exploded view of an all-in-one structural roof panel system according to the first embodiment. The overall roof system is designated by the reference number 10, while the structural all-in-one engineered structural component is indicated at the reference numeral 12. As can be seen from FIGURE 1, the roof panel 14 is formed with the structural component 12, and a sunroof or other "optional equipment" can be added by knocking out predetermined areas, such as 16. Various overhead system components are also illustrated in FIGURE 1. They include side airbag modules 15, an antenna farm 18, a headliner 20, including an aperture 21 adapted to receive a dome light 22, and an aperture 24 adapted to receive an overhead console 25. An edge cut-out 27 is also included to accommodate rearview mirror 28. A motor for a sunroof is also illustrated 29. As has been clearly set forth above, the number and location for the various components which may be added to the all-in-one roof system 10 can be widely varied, and structural ribs 31 are provided at various locations and are adapted to receive such components.

What differentiates the all-in-one structural roof panel system 10 from the other embodiments is that the roof panel 14 is formed with the structural component 12 and preferably is formed integrally therewith, although two-step over-molding co-molded, or inlayed molding operations could be employed if desired. Other techniques for joining roof panel 14 to the structural element 12, as separate components, could also be employed, such as the use of adhesives and the like. Preferably, however, components 12 and 14 are formed in a single molding, casting, forming, or other process.

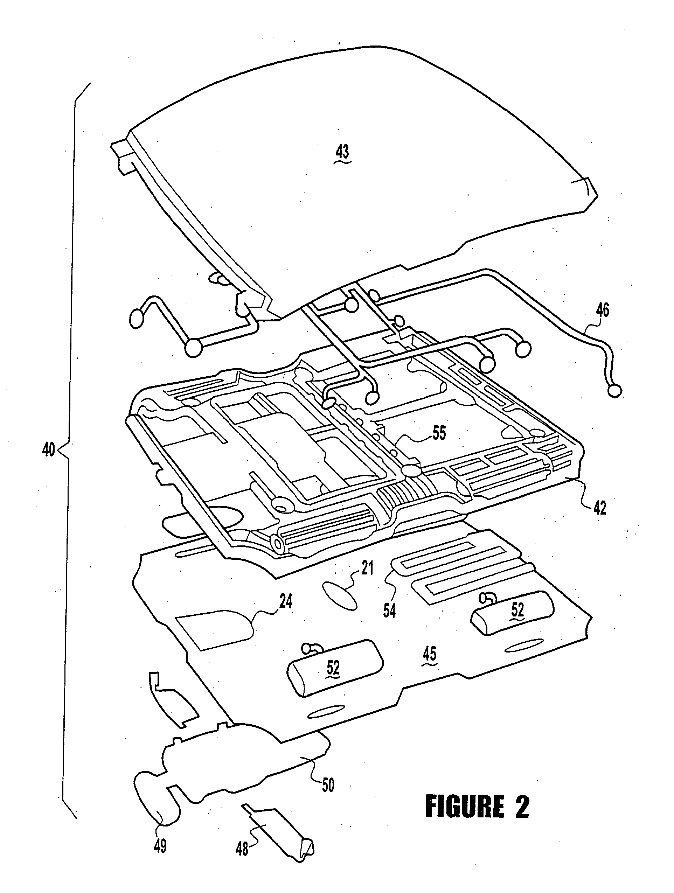

A second embodiment is depicted in FIGURE 2, which includes a super-structure system 40 having a super-structure element 42, a roof panel 43, and a headliner 45. In this embodiment, roof panel 43 is added as a separate assembly set to the super-structure 42, along with other overhead components illustrated here, including wire harness 46, visors 48, a rearview mirror 49, an overhead console 50, airbag assemblies 52, and antenna grid 54.

The super-structure 42 is preferably made from a resin, which may be reinforced if desired. The super-structure 42 includes a network of supporting ribs 55, as well as other predesignated attachment areas for the listed overhead components, or other overhead components which may be selected by the dealer or customer. The joining of the overhead components, as well as the headliner 45 and roof panel 43, may be accomplished using any of the fastening techniques described above.

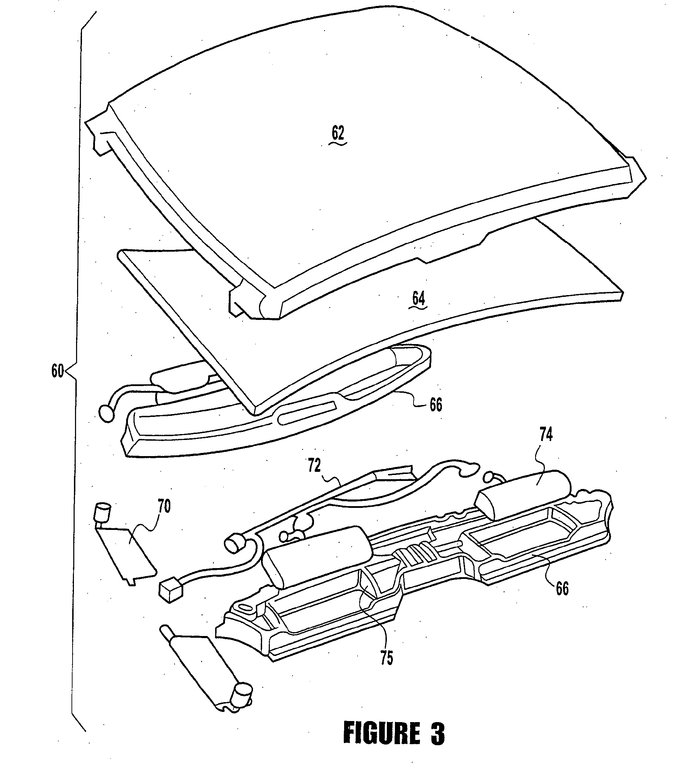

The third embodiment of the present invention is illustrated in FIGURE 3 and can be designated as the pod system 60. In the third embodiment, the roof panel 62 and the headliner 64 need not be structural, since overhead components, the panel 62 and headliner 64 are supported by structural pods 66. In the illustrated embodiment, a pod 66 extends along either side of a completed vehicle, but as indicated above, additional pods may be added fore and aft, or fore and aft pods may replace the side pods 66. Only a few overhead components are illustrated in this FIGURE, including visors 70, a wire harness 72, and airbag canisters 74. As shown, the airbag canisters 74 fit within pockets 75 in pods 66.

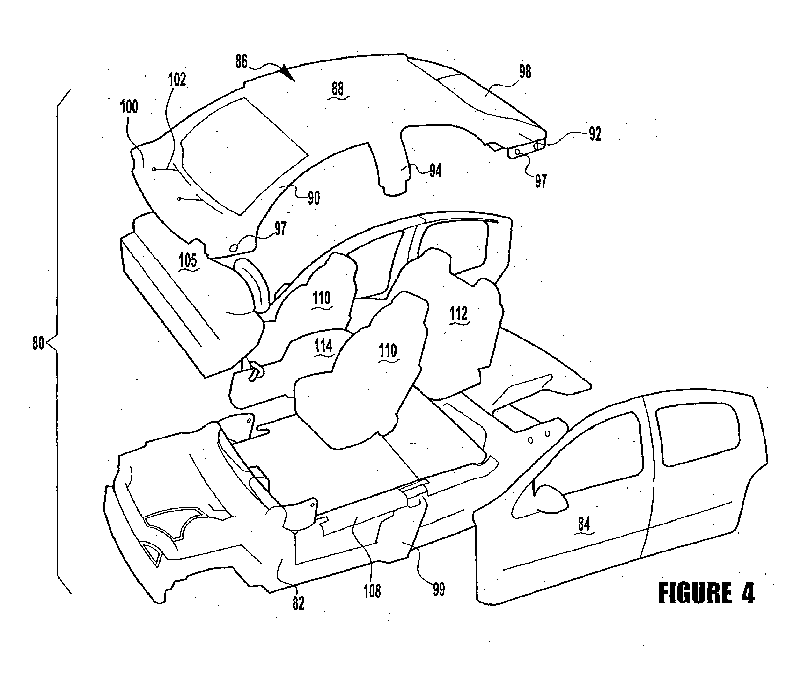

Proceeding now to the description of another alternate embodiment of the invention, FIGURE 4 is an exploded view showing a clam shell-like vehicle construction 80. Construction 80 includes a main vehicle body 82, a door modular assembly 84, and the upper vehicle module 86. In the illustrated embodiment, upper module 86 includes an integral roof panel 88, the A-pillars 90, the C-pillars 92, and a portion of the B-pillars 94. In addition, a package shelf 98 and a front plate 100 are provided, the latter including the windshield wiper assemblies 102. In the exploded form, it can be appreciated that the instrument panel 105, a floor structure 108, front row seats 110, a floor console 114, and rear seats 112 may all be inserted into body 82, in the Z-axis direction. While not specifically shown in FIGURE 4, an alternate embodiment would have the upper surface of instrument panel 105 constructed as part of the upper vehicle module 86, so that the IP upper would be assembled to the remaining components of the instrument panel when upper vehicle module 86 is fully loaded and attached to the remaining components.

Without repeating all of the information contained in the introduction to this section of the specification, it should be clearly understood that the glass for the front and rear of the upper vehicle module 86 could be furnished along with the module or added separately on the final assembly line. In addition, materials and surface treatments can be selected from those described above.

With regard to the B-pillar 94, in FIGURE 4, the portion attached to upper vehicle module 86 is received within coupler 99 attached to the body.

Referring once again to upper vehicle module 86, it will be noted that locators 97 are provided at the base of both the A- and C-pillars for attachment of door modules, or for securing the upper vehicle module 86 to the body 82 as described hereinabove.

## Claims

1. A structural roof system (10; 40; 60; 80) for a vehicle comprising:
a roof panel (14; 43; 62; 88);
a structural element (12; 42) coupled to the roof panel (14; 43; 62; 88) and having a plurality of predetermined removable areas (16) adapted to receive at least one overhead component; and
a headliner (20; 45; 64) coupled to the structural element (12; 42), wherein the structural element (12; 42) provides a substantial portion of the structural capability of the roof system (10; 40; 60; 80).

2. The structural roof system (10) of Claim 1, wherein the roof panel (14) and structural element (12) are integrally formed.

3. The structural roof system (40) of Claim 1, wherein the roof panel (43) is formed as a separate part from the structural element (42) and has sufficient structural strength to withstand finishing, shipping, and assembly to the structural roof system (40).

4. The structural roof system (40) of Claim 1, wherein the headliner (45) has sufficient structural strength to withstand formation, shipping, and assembly to the structural roof system (40).

5. The structural roof system (10) of Claim 1, wherein the predetermined removable areas (16) comprise at least one of a cut-out and a knock-out and the at least one component is selected from the group consisting of lights, assist handles, hooks, airbags, antennas, a sun roof, mirrors, consoles, and motors.

6. The structural roof system of Claim 1 (40; 60; 80), wherein the at least one overhead component is selected from the group consisting of wire harnesses, seals, folding canvas, T-tops, glass roof panels, HVAC vents, HVAC ducts, HVAC controls, headrests, sun protection systems, infotainment components and systems, acoustic treatments, instrumentality, navigation systems, storage components, speakers, emergency wiring systems, displays, cameras, switches, impact countermeasures, occupant detection or sensing systems, center high mount stop lights, power and signal distribution components, tools, air purification systems, bezels, close-off trim, rail components, side and/or rear view camera components.

7. The structural roof system (10; 40; 60; 80) of Claim 1 wherein the roof panel (14; 43; 62; 88) has an exterior class "a" surface.

8. The structural roof system (10; 40; 60; 80) of Claim 7, wherein the "a" surface is provided by a process selected from the group consisting of painting, e-coating, in-mold panting, in-mold coloring, or the use of films.

9. The structural roof panel (10; 40; 60; 80) of Claim 1, wherein the roof panel (14; 43; 62; 88) is formed by a process selected from groups consisting of injection molding, casting, sheet molding, reaction injection molding, lay-up, stamping, and pressing.

10. The structural roof system (40) of Claim 1, wherein the roof panel (43) is formed separately from the structural element (42) and is adhered thereto using a technique selected from the group consisting of adhesives, fittings, Velero®, snaps, clips, straps, fasteners, rivets, fusing, or welding.

11. The structural roof system (10; 40; 60; 80) of Claim 1, wherein each overhead component is attached to the structural element (12; 42) using a technique selected from the group consisting of adhesives, fittings, Velcro®, snaps, clips, straps, fasteners, rivets, fusing, or welding.

12. The structural roof system of Claim 1, wherein the structural element is a superstructure integrally formed with the roof panel.

13. The structural roof system of Claim 12, wherein the superstructure comprises a plurality of ribs and a plurality of locations adapted to receive overhead components.

14. The structural roof system of Claim 12 wherein the superstructure is substantially coterminous with the roof panel and includes a plurality of receptacles configured to selectively receive the overhead components.

15. The structural roof system of Claim 14 wherein at least a portion of the receptacles are removable for accommodating the overhead components within the superstructure.

16. The structural roof system (60) of Claim 1, wherein the structural element comprises a plurality of spaced apart pods (66).

17. The structural roof system (60) of Claim 16, wherein each pod (66) includes at least one location adapted to receive an overhead component.

18. The structural roof system (60) of Claim 16, wherein two pods (66) are spaced apart from one another and are arranged to be located adjacent vehicle side rails when the roof system (60) is placed on a vehicle.

19. The structural roof system (80) of Claim 1, further including locators, adapted to facilitate attachment of the structural roof system (80) to a vehicle during assembly.

20. The structural roof system (80) of Claim 1, further comprising one or more belt-line-up components selected from the group consisting of windshields, pillars, a package shelf (98), seals, covered boxes, wipers (102), occupant retention systems, side rails, or front and rear cross-car rails.

21. The structural roof system of Claim 1 wherein the roof panel (14) comprises an exterior class roof panel, and the structural element is integrally formed with the roof panel (14), the structural element (12) having a plurality of predetermined locations (16) adapted to receive overhead components.

22. The structural roof system (10) of Claim 21, wherein the structural element (12) includes ribs (31) and at least one of the predetermined locations (16) comprises a structure which can be selectively removed.

23. The structural roof system (40) of Claim 1:
wherein the structural element (42) comprises a superstructure having a plurality of preformed receptacles at predetermined locations adapted to receive overhead components;
the superstructure having a first and a second side, the roof panel (43) being attached to the first side.

24. The structural roof system (40) of Claim 23, wherein the superstructure comprises a network of supporting ribs (55).

25. The structural roof system (60) of Claim 1, wherein the structural element comprises at least two pods (66) each having first and second sides, the pods (66) being adapted to receive overhead components, and the roof panel (62) being attached to the first sides of the pods (66).

26. The structural roof system (60) of Claim 25, wherein the pods (66) are elongate and extend in the fore and aft direction with respect to the vehicle with which the roof system (60) will be used.

27. The structural roof system (80) of Claim 1, wherein at least one of an A-pillar (90), a B-pillar (94) and a C-pillar (96) coupled to the structural element and the overhead components comprise at least one preinstalled belt-line-up component or system.

28. The modular structural roof system (80) of Claim 27, wherein the belt-line-up components are selected from the group consisting of pillars, windshields, wipers (102), package shelves (98), coweling; seals, occupant retention systems, side rails or cross-car rails.

29. The modular structural roof system (80) of Claim 27, further comprising a package shelf (98) coupled to the C-pillar (96).

30. The modular structural roof system (80) of Claim 27, further comprising a front plate (100) coupled to the A-pillar (90).

31. The modular structural roof system (80) of Claim 27, further comprising locators configured to align the roof system (80) with a main body of the vehicle.

## Patentansprüche

1. Dachstruktursystem (10; 40; 60; 80) für ein Fahrzeug, wobei das System Folgendes umfasst:
ein Dachpaneel (14; 43; 62; 88);
ein Strukturelement (12; 42), das mit dem Dachpaneel (14; 43; 62; 88) verbunden ist und mehrere vorgegebene entfernbare Bereiche (16) aufweist und dafür geeignet ist, mindestens eine Überkopfkomponente aufzunehmen; und
eine Dachhimmelauskleidung (20; 45; 64), die mit dem Strukturelement (12; 42) verbunden ist, wobei das Strukturelement (12; 42) einen wesentlichen Anteil an der strukturellen Belastbarkeit des Dachsystems (10; 40; 60; 80) hat.

2. Dachstruktursystem (10) nach Anspruch 1, wobei das Dachpaneel (14) und das Strukturelement (12) integral ausgebildet sind.

3. Dachstruktursystem (40) nach Anspruch 1, wobei das Dachpaneel (43) als ein von dem Strukturelement (42) getrenntes Teil ausgebildet ist und genügend strukturelle Festigkeit aufweist, um den Belastungen der Endbearbeitung, des Versandes und der Montage an dem Dachstruktursystem (40) gewachsen zu sein.

4. Dachstruktursystem (40) nach Anspruch 1, wobei die Dachhimmelauskleidung (45) genügend strukturelle Festigkeit aufweist, um den Belastungen der Herstellung, des Versandes und der Montage an dem Dachstruktursystem (40) gewachsen zu sein.

5. Dachstruktursystem (10) nach Anspruch 1, wobei die vorgegebenen entfernbaren Bereiche (16) einen Ausschnitt und/oder einen herauszuschlagenden Durchbruch umfassen und die mindestens eine Komponente aus folgender Gruppe ausgewählt ist: Lampen, Haltegriffe, Haken, Airbags, Antennen, ein Sonnendach, Spiegel, Konsolen und Motoren.

6. Dachstruktursystem (40; 60; 80) nach Anspruch 1, wobei die mindestens eine Überkopfkomponente aus folgender Gruppe ausgewählt ist: Kabelbäume, Dichtungen, Faltdach, T-Tops, Glasdachpaneele, Klimaanlagenentlüftungen, Klimaanlagenschächte, Klimaanlagenbedienelemente, Kopfstützen, Sonnenschutzsysteme, Infotainmentkomponenten und -systeme, Schallschutzbehandlungen, Instrumente, Navigationssysteme, Ablagen und Staufächer, Lautsprecher, Notverkabelungssysteme, Anzeigevorrichtungen, Kameras, Schalter, Aufprallschutzmaßnahmen, Insassendetektions- oder -erfassungssysteme, dritte Bremsleuchten, Strom- und Signalverteilungskomponenten, Werkzeug, Luftreinigungssysteme, Einfassungen, Absperrverkleidungen, Trägerkomponenten, Seiten- und oder Rückfahrkamerakomponenten.

7. Dachstruktursystem (10; 40; 60; 80) nach Anspruch 1, wobei das Dachpaneel (14; 43; 62; 88) eine Außenfläche der Klasse "a" aufweist.

8. Dachstruktursystem (10; 40; 60; 80) nach Anspruch 7, wobei die "a"-Oberfläche durch einen Prozess hergestellt wird, der aus folgender Gruppe ausgewählt ist: Lackieren, Elektrolackieren, Inmould-Lackierung, Inmould-Färben, oder durch die Verwendung von Filmen hergestellt wird.

9. Dachstrukturpaneel (10; 40; 60; 80) nach Anspruch 1, wobei das Dachpaneel (14; 43; 62; 88) durch einen Prozess hergestellt wird, der aus folgender Gruppe ausgewählt ist: Spritzgießen, Gießen, Harzmattenformung, Reaktionsspritzgießen, Schichtaufbauverfahren, Prägen und Pressen.

10. Dachstruktursystem (40) nach Anspruch 1, wobei das Dachpaneel (43) von dem Strukturelement (42) getrennt ausgebildet wird und an ihm mittels einer Technik angehaftet wird, die aus folgender Gruppe ausgewählt ist: Klebstoffe, Einpassungselemente, Velcro®, Schnappverbinder, Clips, Bänder, Befestigungsmittel, Niete, Verschmelzen oder Schweißen.

11. Dachstruktursystem (10; 40; 60; 80) nach Anspruch 1, wobei jede Überkopfkomponente an dem Strukturelement (12; 42) mittels einer Technik angebracht ist, die aus folgender Gruppe ausgewählt ist: Klebstoffe, Einpassungselemente, Velcro^{®}, Schnappverbinder, Clips, Bänder, Befestigungsmittel, Niete, Verschmelzen oder Schweißen.

12. Dachstruktursystem nach Anspruch 1, wobei das Strukturelement ein Oberbau ist, der integral mit dem Dachpaneel ausgebildet ist.

13. Dachstruktursystem nach Anspruch 12, wobei der Oberbau mehrere Rippen und mehrere Stellen umfasst, die dafür geeignet sind, Überkopfkomponenten aufzunehmen.

14. Dachstruktursystem nach Anspruch 12, wobei der Oberbau im Wesentlichen zusammen mit dem Dachpaneel abschließt und mehrere Aufnahmen enthält, die dafür konfiguriert sind, selektiv die Überkopfkomponenten aufzunehmen.

15. Dachstruktursystem nach Anspruch 14, wobei mindestens ein Teil der Aufnahmen entfernbar sind, um die Überkopfkomponenten in dem Oberbau unterzubringen.

16. Dachstruktursystem (60) nach Anspruch 1, wobei das Strukturelement mehrere voneinander beabstandete Zellen (66) umfasst.

17. Dachstruktursystem (60) nach Anspruch 16, wobei jede Zelle (66) mindestens eine Stelle enthält, die dafür geeignet ist, eine Überkopfkomponente aufzunehmen.

18. Dachstruktursystem (60) nach Anspruch 16, wobei zwei Zellen (66) voneinander beabstandet sind und so angeordnet sind, dass sie sich neben Fahrzeuglängsträgern befinden, wenn das Dachsystem (60) auf ein Fahrzeug gesetzt wird.

19. Dachstruktursystem (80) nach Anspruch 1, das des Weiteren Positionierhilfen enthält, die dafür geeignet ist, die Anbringung des Dachstruktursystems (80) an einem Fahrzeug während der Montage zu unterstützen.

20. Dachstruktursystem (80) nach Anspruch 1, das des Weiteren eine oder mehrere Bandaufreihungskomponenten umfasst, die aus folgender Gruppe ausgewählt sind: Windschutzscheiben, Säulen, ein Hutablage (98), Dichtungen, abgedeckte Kästen, Scheibenwischer (102), Insassenrückhaltesysteme, Längsträger oder vordere oder hintere Rahmenquerträger.

21. Dachstruktursystem nach Anspruch 1, wobei das Dachpaneel (14) ein äußeres Dachpaneel der Klasse A umfasst und das Strukturelement (12) integral mit dem Dachpaneel (14) ausgebildet ist, wobei das Strukturelement (12) mehrere vorgegebene Stellen (16) aufweist, die dafür geeignet sind, Überkopfkomponenten aufzunehmen.

22. Dachstruktursystem (10) nach Anspruch 21, wobei das Strukturelement (12) Rippen (31) enthält und mindestens eine der vorgegebenen Stellen (16) eine Struktur umfasst, die sich selektiv entfernen lässt.

23. Dachstruktursystem (40) nach Anspruch 1, wobei das Strukturelement (12) einen Oberbau mit mehreren vorgeformten Aufnahmen an vorgegebenen Stellen umfasst, die dafür geeignet sind, Überkopfkomponenten aufzunehmen;
wobei der Oberbau eine erste und eine zweite Seite aufweist, wobei das Dachpaneel (43) an der ersten Seite angebracht ist.

24. Dachstruktursystem (40) nach Anspruch 23, wobei der Oberbau ein Netzwerk aus Stützrippen (55) umfasst.

25. Dachstruktursystem (60) nach Anspruch 1, wobei das Strukturelement mindestens zwei Zellen (66) umfasst, die jeweils eine erste und eine zweite Seite aufweisen, wobei die Zellen (66) dafür geeignet sind, Überkopfkomponenten aufzunehmen, und das Dachpaneel (62) an den ersten Seiten der Zellen (66) angebracht ist.

26. Dachstruktursystem (60) nach Anspruch 25, wobei die Zellen (66) länglich sind und sich relativ zu dem Fahrzeug, in dem das Dachsystem (60) verwendet wird, in die Vorwärts- und in die Rückwärtsrichtung erstrecken.

27. Dachstruktursystem (80) nach Anspruch 1, wobei eine A-Säule (90) und/oder eine B-Säule (94) und/oder eine C-Säule (96) an das Strukturelement verbunden sind und die Überkopfkomponenten mindestens eine vorinstallierte Bandaufreihungskomponente oder mindestens ein vorinstalliertes Bandaufreihungssystem umfassen.

28. Modulares Dachstruktursystem (80) nach Anspruch 27, wobei die Bandaufreihungskomponenten aus folgender Gruppe ausgewählt sind: Säulen, Windschutzscheiben, Scheibenwischer (102), Hutablagen (98), Hauben, Dichtungen, Insassenrückhaltesysteme, Längsträger oder Rahmenquerträger.

29. Modulares Dachstruktursystem (80) nach Anspruch 27, das des Weiteren eine Hutablage (98) umfasst, die mit der C-Säule (96) verbunden ist.

30. Modulares Dachstruktursystem (80) nach Anspruch 27, das des Weiteren eine Frontplatte (100) umfasst, die mit der A-Säule (90) verbunden ist.

31. Modulares Dachstruktursystem (80) nach Anspruch 27, das des Weiteren Positionierhilfen umfasst, die dafür konfiguriert sind, das Dachsystem (80) auf eine Hauptkarosserie des Fahrzeugs auszurichten.

## Revendications

1. Système de toit structurel (10 ; 40 ; 60 ; 80) pour un véhicule, comprenant :
un panneau de toit (14 ; 43 ; 62 ; 88) ;
un élément structurel (12 ; 42) couplé au panneau de toit (14 ; 43 ; 62 ; 88) et ayant une pluralité de zones amovibles prédéterminées (16) conçues pour recevoir au moins un composant situé au-dessus de la tête ; et
une garniture de toit (20 ; 45 ; 64) couplée à l'élément structurel (12 ; 42), où l'élément structurel (12 ; 42) fournit une partie substantielle de la capacité structurelle du système de toit (10 ;40 ;60 ; 80).

2. Système de toit structurel (10) selon la revendication 1, dans lequel le panneau de toit (14) et l'élément structurel (12) sont formés en une seule pièce.

3. Système de toit structurel (40) selon la revendication 1, dans lequel le panneau de toit (43) est formé en tant que partie séparée de l'élément structurel (42), et possède une résistance structurelle suffisante pour supporter la finition, le transport et l'assemblage sur le système de toit structurel (40).

4. Système de toit structurel (40) selon la revendication 1, dans lequel la garniture de toit (45) possède une résistance structurelle suffisante pour supporter la formation, le transport et l'assemblage sur le système de toit structurel (40).

5. Système de toit structurel (10) selon la revendication 1, dans lequel les zones amovibles prédéterminées (16) comprennent au moins l'un d'un découpage et d'un décochage, et ledit au moins un composant est sélectionné dans le groupe composé de voyants lumineux, poignées de maintien, crochets, airbags, antennes, toit solaire, rétroviseurs, consoles, et moteurs.

6. Système de toit structurel (40 ; 60 ; 80) selon la revendication 1, dans lequel au moins un composant placé au-dessus de la tête est sélectionné dans le groupe composé de faisceaux électriques, joints, toiles pliantes, éléments supérieurs en T, panneaux de toit en verre, bouches d'aération CVCA, conduits CVCA, commandes CVCA, appuie-tête, systèmes de protection contre le soleil, systèmes et composants d'info-loisirs, traitements acoustiques, instrumentalités, systèmes de navigation, composants de stockage, haut-parleurs, systèmes de câblage d'urgence, écrans, caméras, commutateurs, contre-mesures d'impact, systèmes de détection d'occupant, feux stop montés en haut au centre, composants de distribution de signaux et de puissance, outils, systèmes de purification d'air, lunettes, garnitures, composants de rail, composants de caméra latérale et/ou arrière.

7. Système de toit structurel (10 ; 40 ; 60 ; 80) selon la revendication 1, dans lequel le panneau de toit (14 ; 43 ; 62 ; 88) possède une surface extérieure de classe « a ».

8. Système de toit structurel (10 ; 40 ; 60 ; 80) selon la revendication 7, dans lequel la surface de classe « a » est fournie par un procédé sélectionné dans le groupe composé de peinture, d'e-coating, de peinture dans le moule, de coloration dans le moule ou l'utilisation de films.

9. Panneau de toit structurel (10 ; 40 ; 60 ; 80) selon la revendication 1, dans lequel le panneau de toit (14; 43 ; 62; 88) est formé par un procédé sélectionné dans le groupe composé de moulage par injection, de coulée, de moulage de préimprégnés, de moulage par injection de réaction, d'empilage, d'estampage et de compression.

10. Système de toit structurel (40) selon la revendication 1, dans lequel le panneau de toit (43) est formé séparément de l'élément structurel (42), et est adhésivé à celui-ci à l'aide d'une technique sélectionnée dans le groupe composé d'adhésifs, de fixations, de Velcro®, d'attaches, de clips, de bandes, de dispositifs de fixation, de rivets, de fusion ou de soudage.

11. Système de toit structurel (10 ; 40 ; 60 ; 80) selon la revendication 1, dans lequel chaque composant placé au-dessus de la tête est fixé à l'élément structurel (12 ; 42) à l'aide d'une technique choisie dans le groupe composé d'adhésifs, de fixations, de Velcro®, d'attaches, de clips, de bandes, d'organes d'assemblage, de rivets, de fusion ou de soudage.

12. Système de toit structurel selon la revendication 1, dans lequel l'élément structurel est une superstructure formée en une seule pièce avec le panneau de toit.

13. Système de toit structurel selon la revendication 12, dans lequel la superstructure comprend une pluralité de nervures, et une pluralité d'emplacements conçus pour recevoir des composants placés au-dessus de la tête.

14. Système de toit structurel selon la revendication 12, dans lequel la superstructure est sensiblement contiguë au panneau de toit, et comporte une pluralité de réceptacles configurés pour recevoir de façon sélective les composants placés au-dessus de la tête.

15. Système de toit structurel selon la revendication 14, dans lequel au moins une partie des réceptacles est amovible pour loger les composants placés au-dessus de la tête dans la superstructure.

16. Système de toit structurel (60) selon la revendication 1, dans lequel l'élément structurel comprend une pluralité de nacelles espacées (66).

17. Système de toit structurel (60) selon la revendication 16, dans lequel chaque nacelle (66) comporte au moins un emplacement conçu pour recevoir un composant placé au-dessus de la tête.

18. Système de toit structurel (60) selon la revendication 16, dans lequel deux nacelles (66) sont espacées l'une de l'autre, et agencées pour être situées adjacentes aux rails latéraux du véhicule lorsque le système de toit (60) est placé sur un véhicule.

19. Système de toit structurel (80) selon la revendication 1, comportant en outre des positionneurs conçus pour faciliter la fixation du système de toit structurel (80) à un véhicule au cours de l'assemblage.

20. Système de toit structurel (80) selon la revendication 1, comprenant en outre un ou plusieurs composants de ceinture de caisse sélectionnés dans le groupe composé de pare-brise, montants, tablette monobloc (98), joints, boîtes couvertes, essuie-glaces (102), systèmes de rétention d'occupant, rails latéraux ou rails avant et arrière.

21. Système de toit structurel selon la revendication 1, dans lequel le panneau de toit (14) comprend un panneau de toit extérieur de classe A, et l'élément structurel (12) est formé en une seule pièce avec le panneau de toit (14), l'élément structurel (12) ayant une pluralité d'emplacements prédéterminés (16) conçus pour recevoir les composants placés au-dessus de la tête.

22. Système de toit structurel (10) selon la revendication 21, dans lequel l'élément structurel (12) comporte des nervures (31), et l'un au moins des emplacements prédéterminés (16) comprend une structure qui peut être retirée de façon sélective.

23. Système de toit structurel (40) selon la revendication 1, dans lequel l'élément structurel (42) comprend :
une superstructure ayant une pluralité de réceptacles préformés en des emplacements prédéterminés, conçus pour recevoir les composants placés au-dessus de la tête ;
la superstructure ayant un premier et un deuxième côtés, et le panneau de toit (43) étant fixé au premier côté.

24. Système de toit structurel (40) selon la revendication 23, dans lequel la superstructure comprend un réseau de rails de support (55).

25. Système de toit structurel (60) selon la revendication 1, dans lequel l'élément structurel comprend au moins deux nacelles (66) ayant chacune des premier et deuxième côtés, les nacelles (66) étant conçues pour recevoir les composants placés au-dessus de la tête, et le panneau de toit (62) étant fixé au premier côté des nacelles (66).

26. Système de toit structurel (60) selon la revendication 25, dans lequel les nacelles (66) sont allongées, et s'étendent vers l'avant et vers l'arrière par rapport au véhicule avec lequel le système de toit (60) va être utilisé.

27. Système de toit structurel (80) selon la revendication 1, dans lequel l'un au moins des montants A (90), montant B (94) et montant C (96) couplés à l'élément structurel et les composants placés au-dessus de la tête comprennent au moins un système ou composant de ceinture de caisse préinstallé.

28. Système de toit structurel modulaire (80) selon la revendication 27, dans lequel les composants de ceinture de caisse sont sélectionnés dans le groupe composé de montants, pare-brise, essuie-glaces (102), tablettes monobloc (98), joints, système de rétention d'occupant, rails latéraux ou rails de voiture transversaux.

29. Système de toit structurel (80) selon la revendication 27, comprenant en outre une tablette monobloc (98) couplée au montant C (96).

30. Système de toit structurel modulaire (80) selon la revendication 27, comprenant en outre un plateau avant (100) couplé au montant A (90).

31. Système de toit structurel modulaire (80) selon la revendication 27, comprenant en outre des positionneurs configurés pour aligner le système de toit (80) avec le corps principal du véhicule.
